# EUROPÄISCHE PATENTSCHRIFT

(11) **EP 3 168 957 B1**
(45) Veröffentlichungstag und Bekanntmachung des Hinweises auf die Patenterteilung: **06.02.2019**
(21) Anmeldenummer: 16198534.6
(22) Anmeldetag: 11.11.2016
(51) Int. Cl.: H02J 7/00, H02J 7/34

(54) **VERFAHREN UND VORRICHTUNG FÜR DAS ENERGIEMANAGEMENT EINES ENERGIESPEICHERS ZUR VERMEIDUNG VON MIKROZYKLEN**
METHOD AND DEVICE FOR THE POWER MANAGEMENT OF AN ENERGY STORE FOR PREVENTING MICRO CYCLES
PROCÉDÉ ET DISPOSITIF DE GESTION D'ÉNERGIE D'UN ACCUMULATEUR D'ÉNERGIE POUR ÉVITER LES MICROCYCLES

(30) Priorität: 11.11.2015 DE 102015222264
(43) Veröffentlichungstag der Anmeldung: 17.05.2017
(73) Patentinhaber: Viessmann Werke GmbH & Co. KG, 35108 Allendorf (DE)
(72) Erfinder: HAFNER, Bernd, 35108 Allendorf (DE)
(74) Vertreter: MERH-IP Matias Erny Reichl Hoffmann Patentanwälte PartG mbB

(56) Entgegenhaltungen:
- WO-A2-2013/170274
- US-A1- 2010 184 560

## Beschreibung

Die Erfindung betrifft ein Verfahren für das Energiemanagement eines Energiespeichers für elektrische Energie, beispielsweise eines elektrochemischen Energiespeichers, und eine entsprechende Steuerungseinrichtung. Insbesondere betrifft die Erfindung ein solches Verfahren und eine solche Steuerungseinrichtung zur Vermeidung von Mikrozyklen beim Laden und Entladen des Energiespeichers.

### Hintergrund der Erfindung

Im Stand der Technik sind Energiespeicher, zum Beispiel Akkumulatoren (Batterien) zum elektrochemischen Speichern elektrischer Energie bekannt. Zweckmäßig wird die Lebensdauer von Batterien als Anzahl von Vollzyklen, d.h. vollständigen Lade- und Entladevorgängen angegeben. Ein Zyklus bezeichnet dabei allgemein die Phase zwischen zwei Umschaltvorgängen der Elektrochemie der Batterie.

Allerdings hat sich herausgestellt, dass die schädigende Wirkung von Lade- und Entladevorgängen von der Zyklentiefe (d.h. dem Anteil der während des betreffenden Zyklus zugeführten oder entnommenen Energie an der Gesamtkapazität der Batterie) abhängt. Mikrozyklen, d.h. Lade- und Entladevorgänge mit sehr geringem relativem Anteil an der Gesamtkapazität der Batterie (z.B. etwa kleiner als 10% der Gesamtkapazität) wirken sich besonders schädigend auf die Lebensdauer der Batterie aus. Beispielsweise haben 100 Zyklen mit einer Ladung und Entladung von lediglich 1% der Gesamtkapazität eine größere schädigende Wirkung als ein Vollzyklus mit vollständiger Ladung und Entladung.

Besonders betroffen von den schädigenden Auswirkungen von Mikrozyklen sind Energiespeicher in Systemen, in denen eine Energiequelle und eine elektrische Last mit näherungsweise gleicher Leistungsaufnahme bzw. Leistungsabgabe in schneller zeitlicher Abfolge dem Energiespeicher kleine Mengen Energie zuführen oder kleine Mengen Energie von diesem abziehen. Beispiele für solche Systeme sind Mikro-Kraft-Wärme-Kopplungsanlagen (Mikro-KWK) für den gebäudeintegrierten Einsatz, oder Elektrofahrzeug mit Energierückgewinnung bei Bremsvorgängen.

US 2010/0184560 A1 beschreibt ein Langstreckenelektrofahrzeug, welches zur Erhöhung der Wegstrecke Mittel zum Umschalten zwischen einer entladenen Energiequelle und einer geladenen Energiequelle beinhaltet. Das Elektrofahrzeug führt zwei Batteriereihen mit, wobei jede Reihe durch eine Vielzahl an Betterien gebildet wird. Spannung wird von den Batterien über eine Motorsteuerung zum Motor geleitet.

WO 2013/170274 A2 beschreibt ein digitales elektrisches Leitsteuersystem zur Verwendung mit elektrischen Speichersystemen und konventionellen und alternativen Energiequellen, und Verfahren zum Gebrauch dieses Systems. In einem Apsekt wird ein Verfahren zur Bestimmung einer Energiemenge, genutzt durch eine Last, durch Verwenden eines Computer beschrieben, wobei die Energie von einer ersten und einer zweiten Batterie bereitgestellt wird, und wobei weitere Energie zum Laden der ersten und der zweiten Batterie bereitgestellt wird, wobei das Verfahren die Schritte umfasst: Initiieren, Verwenden des Computers, Laden der ersten Batterie mit der weiteren Energie während die zweite Batterie durch Verbindung mit der Last entleert wird; Initiieren, Verwenden des Computers, Laden der zweiten Batterie mit der weiteren Energie während die erste Batterie durch Verbindung mit der Last entleert wird; und Detektieren, Verwenden des Computers, einer Energiemenge, verbraucht während eines Zeitintervalls, basierend auf einer Menge an Ladung der ersten Batterie und der zweiten Batterie während des Zeitintervalls. In einem anderen Aspekt werden Peer-to-Peer Transaktion und mobile Energiedienste beschrieben.

### Zusammenfassung der Erfindung

Es ist daher Aufgabe der Erfindung, ein Verfahren für das Energiemanagement eines Energiespeichers für elektrische Energie und eine entsprechende Steuerungseinrichtung bereitzustellen, die frei von den oben festgestellten Problemen im Stand der Technik sind. Es ist insbesondere Aufgabe der Erfindung, ein Verfahren für das Energiemanagement eines Energiespeichers für elektrische Energie und eine entsprechende Steuerungseinrichtung bereitzustellen, die es ermöglichen, das Auftreten von Mikrozyklen beim Laden und Entladen des Energiespeichers zu vermeiden.

Zur Lösung dieser Aufgabe werden erfindungsgemäß ein Verfahren und eine Steuereinrichtung für das Energiemanagement eines Energiespeichers für elektrische Energie mit den Merkmalen der unabhängigen Patentansprüche vorgeschlagen. Bevorzugte Ausführungsformen der Erfindung sind Gegenstand der abhängigen Patentansprüche.

Gemäß einem ersten Aspekt der Erfindung wird ein Verfahren für das Energiemanagement (d.h. Lade- und Entlademanagement, bzw. Speichermanagement oder Batteriemanagement) eines Energiespeichers für elektrische Energie mit zumindest zwei Speicherzellen, der Energie (Leistung) an eine externe elektrische Last abgeben und Energie (Leistung) von einer externen Quelle (Energiequelle) aufnehmen kann, vorgeschlagen. Die Lastleistung der externen elektrischen Last kann abschnittsweise die Leistung der externen elektrischen Quelle übersteigen, so dass eine Abgabe von Energie durch den Energiespeicher erforderlich ist, und die Lastleistung der externen elektrischen Last kann abschnittsweise die Leistung der externen elektrischen Quelle unterschreiten, so dass eine Aufnahme von Energie durch den Energiespeicher erforderlich ist. Abschnitte, in denen eine Abgabe von Energie durch den Energiespeicher erforderlich ist, und Abschnitte, in denen eine Aufnahme von Energie durch den Energiespeicher erforderlich ist, können sich in zeitlicher Folge, ggf. schneller zeitlicher Abfolge (z.B. mehrmals pro Stunde), abwechseln. Bei den Speicherzellen kann es sich um elektrochemische Speicherzellen handeln, d.h. um Akkumulatoren (Batterien), wie beispielsweise Lithium-Ionen-Akkumulatoren oder Bleiakkumulatoren. Die Speicherzellen müssen nicht zwingend gleichen Typs sein. Das Verfahren weist zumindest zwei verschiedene Betriebsmoden für das Energiemanagement auf. Dabei kann zu jedem Zeitpunkt jeweils nur einer der Betriebsmoden aktiv sein. In jedem Betriebsmodus wird eine der Speicherzellen des Energiespeichers als eine erste Speicherzelle verwendet (betrieben), und eine weitere Speicherzelle des Energiespeichers als eine zweite Speicherzelle verwendet (betrieben). In einem jeden Betriebsmodus wird bei Aufnahme von Energie durch den Energiespeicher von der externen Quelle ausschließlich die erste Speicherzelle geladen. Das heißt, die jeweilige erste Speicherzelle wird für einen Ladevorgang bereitgestellt, so dass bei erforderlicher Aufnahme von Energie durch den Energiespeicher von der externen Quelle ausschließlich die erste Speicherzelle geladen wird. Weiterhin wird bei Abgabe von Energie durch den Energiespeicher an die externe elektrische Last ausschließlich die zweite Speicherzelle entladen. Das heißt, die jeweilige zweite Speicherzelle wird für einen Entladevorgang bereitgestellt, so dass bei erforderlicher Abgabe von Energie durch den Energiespeicher an die externe elektrische Last ausschließlich die zweite Speicherzelle entladen wird. Ein Umschalten (Wechseln) zwischen den Betriebsmoden erfolgt in Abhängigkeit von der Restkapazität (d.h. dem Ladezustand) zumindest einer der ersten und zweiten Speicherzellen des jeweils aktiven Betriebsmodus.

Gemäß dem vorgeschlagenen Verfahren wird eine jede Speicherzelle nicht nachgeladen, solange nicht wenigstens eine Mindestentladung dieser Gemäß dem vorgeschlagenen Verfahren wird eine jede Speicherzelle nicht nachgeladen, solange nicht wenigstens eine Mindestentladung dieser Speicherzelle erreicht ist. Dadurch kann das Auftreten von Mikrozyklen für die Speicherzellen des Energiespeichers vermieden werden. Vorzeitige Alterung des Energiespeichers wird so unterbunden, d.h. die Lebensdauer des Energiespeichers wird verlängert. Zudem kann durch geeignete Wahl der Zyklentiefe die Lebensdauer einer jeden Speicherzelle gegenüber der Lebensdauer im Betrieb mit jeweils vollständiger Ladung und Entladung verlängert werden, da, wie sich gezeigt hat, z.B. zweimalige fünfzigprozentige Ladung und Entladung geringere schädigende Wirkung entfaltet als eine vollständige Ladung und Entladung. Insbesondere kann durch Ausführen des vorgeschlagenen Verfahrens die ständige Bereitschaft des Energiespeichers für die Ladung und Entladung (Aufnahme und Abgabe von Energie (Leistung)) sichergestellt werden, ohne das Risiko schädigender Mikrozyklen in Kauf nehmen zu müssen.

In jedem Betriebsmodus wird dabei die jeweilige erste Speicherzelle (bzw. deren Zellspannung) auf einem ersten Spannungsniveau gehalten, das im Wesentlichen der Ladespannung der Speicherzellen entspricht. Das erste Spannungsniveau kann um bis zu eine vorbestimmte erste Spannungsdifferenz unterhalb der Ladespannung liegen. Die erste Spannungsdifferenz ist dabei vorzugsweise klein gegenüber der Differenz zwischen Ladespannung und Entladespannung gewählt, wobei die Ladespannung diejenige Spannung ist, bei deren Überschreitung durch die an der Speicherzelle anliegende Spannung (Zellspannung) die Speicherzelle geladen wird, und die Entladespannung diejenige Spannung ist, bei deren Unterschreitung durch die an der Speicherzelle anliegende Spannung die Speicherzelle entladen wird. Durch diese Maßnahme wird ein Entladen der ersten Speicherzelle verhindert, und die erste Speicherzelle kann unmittelbar zur Energieaufnahme (Leistungsaufnahme), d.h. zum Laden, bereitgestellt werden, falls eine Energieaufnahme durch den Energiespeicher von der externen Quelle erforderlich wird.

Weiterhin wird dabei in jedem Betriebsmodus die jeweilige zweite Speicherzelle (bzw. deren Zellspannung) auf einem zweiten Spannungsniveau gehalten, das im Wesentlichen der Entladespannung der Speicherzellen entspricht. Das zweite Spannungsniveau kann dabei um bis zu eine vorbestimmte zweite Spannungsdifferenz oberhalb der Entladespannung liegen. Vorzugsweise sind die erste Spannungsdifferenz und gegebenenfalls die zweite Spannungsdifferenz so gewählt (z.B. jeweils klein gegenüber der Differenz zwischen Ladespannung und Entladespannung), dass das erste Spannungsniveau stets oberhalb des zweiten Spannungsniveaus liegt. Durch diese Maßnahme wird ein Laden der zweiten Speicherzelle verhindert, und die zweite Speicherzelle kann unmittelbar zur Energieabgabe, d.h. zum Entladen, bereitgestellt werden, falls eine Energieabgabe durch den Energiespeicher an die externe elektrische Last erforderlich wird.

In Ausführungsformen der Erfindung kann ein Umschalten zwischen den Betriebsmoden erfolgen, wenn die Restkapazität der jeweiligen ersten Speicherzelle des aktiven Betriebsmodus einen vorbestimmten ersten Schwellwert erreicht oder überschreitet. Dabei ist vorausgesetzt, dass die Restkapazität der ersten Speicherzelle anfangs unterhalb des ersten Schwellwerts liegt. Der erste Schwellwert bezeichnet eine obere Grenze für die Restkapazität bzw. den Ladezustand. Der erste Schwellwert kann z.B. im Wesentlichen vollständiger Ladung der Speicherzelle entsprechen.

Bevorzugt wird bei Erreichen oder Überschreiten des ersten Schwellwerts durch die Restkapazität der jeweiligen ersten Speicherzelle des aktiven Betriebsmodus in einen (neuen) Betriebsmodus gewechselt, in dem eine Speicherzelle des Energiespeichers mit niedrigerer Restkapazität als die bisherige erste Speicherzelle als neue erste Speicherzelle betrieben wird. Zugleich kann in dem (neuen) Betriebsmodus, in den gewechselt wird, eine Speicherzelle des Energiespeichers mit höherer Restkapazität als die bisherige zweite Speicherzelle als neue zweite Speicherzelle betrieben werden.

Durch die vorbeschriebenen Maßnahmen kann sichergestellt werden, dass der Energiespeicher stets Kapazitäten zur Aufnahme von Energie (Leistung) von der externen Quelle bereitstellt.

In Ausführungsformen der Erfindung kann alternativ oder zusätzlich ein Umschalten zwischen den Betriebsmoden erfolgen, wenn der Ladungszustand (Ladezustand) der jeweiligen zweiten Speicherzelle des aktiven Betriebsmodus einen vorbestimmten zweiten Schwellwert erreicht oder unterschreitet. Dabei ist vorausgesetzt, dass die Restkapazität der zweiten Speicherzelle anfangs oberhalb des zweiten Schwellwerts liegt. Der zweite Schwellwert bezeichnet eine untere Grenze für die Restkapazität bzw. den Ladezustand. Der zweite Schwellwert kann z.B. im Wesentlichen vollständiger Entladung der Speicherzelle entsprechen. Vorzugsweise sind die ersten und zweiten Schwellwerte dabei so gewählt, dass der erste Schwellwert oberhalb des zweiten Schwellwerts liegt, also größerer Restkapazität entspricht als der zweite Schwellwert.

Bevorzugt wird bei Erreichen oder Unterschreiten des zweiten Schwellwerts durch die Restkapazität der jeweiligen zweiten Speicherzelle des aktiven Betriebsmodus in einen (neuen) Betriebsmodus gewechselt, in dem eine Speicherzelle des Energiespeichers mit höherer Restkapazität als die bisherige zweite Speicherzelle als neue zweite Speicherzelle betrieben wird. Zugleich kann in dem (neuen) Betriebsmodus, in den gewechselt wird, eine Speicherzelle des Energiespeichers mit niedrigerer Restkapazität als die bisherige erste Speicherzelle als neue erste Speicherzelle betrieben werden.

Durch die vorbeschriebenen Maßnahmen kann sichergestellt werden, dass der Energiespeicher stets Kapazitäten zur Abgabe von Energie (Leistung) an die externe elektrische Last bereitstellt.

Es ist weiterhin vorteilhaft, wenn zur Aufrechterhaltung des ersten Spannungsniveaus für die erste Speicherzelle des aktiven Betriebsmodus Energie von der zweiten Speicherzelle des aktiven Betriebsmodus an die erste Speicherzelle übertragen wird, d.h. die zweite Speicherzelle zur Aufrechterhaltung des ersten Spannungsniveaus für die erste Speicherzelle entladen wird. Hierdurch kann eine vorübergehende Entladung der ersten Speicherzelle, die zur Aufnahme von Energie (Leistung) von der externen Quelle bereitsteht, und somit das Auftreten von Mikrozyklen in der ersten Speicherzelle, vermieden werden.

In Ausführungsformen der Erfindung können beim Umschalten von einem ersten der zumindest zwei Betriebsmoden zu einem zweiten der zumindest zwei Betriebsmoden die jeweils ersten und zweiten Speicherzellen ihre Rollen tauschen. Mit anderen Worten entspricht in diesem Fall die erste Speicherzelle des ersten Betriebsmodus der zweiten Speicherzelle des zweiten Betriebsmodus, und die zweite Speicherzelle des ersten Betriebsmodus entspricht der ersten Speicherzelle des zweiten Betriebsmodus. Durch Verwendung des entsprechenden Verfahrens können Mikrozyklen in Energiespeichern vermieden werden, die lediglich zwei Speicherzellen aufweisen.

In Ausführungsformen der Erfindung kann, sofern der Energiespeicher mehr als zwei Speicherzellen umfasst, in zumindest einem der Betriebsmoden zumindest eine der Speicherzellen als eine dritte Speicherzelle betrieben werden. Beispielsweise können einige oder alle Speicherzellen des Energiespeichers, die nicht als erste Speicherzellen oder als zweite Speicherzellen betrieben werden, als dritte Speicherzellen betrieben werden. Die jeweilige dritte Speicherzelle kann dabei in einem Ruhezustand gehalten werden. Der Ruhezustand kann einem Zustand entsprechen, in dem die Zellspannung auf einem dritten Spannungsniveau gehalten wird, das zwischen der Entladespannung und der Ladespannung, bzw. zwischen den ersten und zweiten Spannungsniveaus, liegt. Alternativ oder zusätzlich kann der Ruhezustand einem Zustand entsprechen, in dem der Ladezustand (Restkapazität) auf einem vorgegebenen Wert, beispielsweise zwischen den ersten und zweiten Schwellwerten, gehalten wird. Hierzu kann anfangs eine gezielte Entladung oder gezielte Aufladung der entsprechenden Speicherzelle durchgeführt werden.

Hierdurch können Speicherzellen, die weder zur Ladung noch zur Entladung bereitgehalten werden, durch geeignete Wahl der Zellspannung und/oder des Ladezustands in einem schonenden, die Lebensdauer der entsprechenden Speicherzellen verlängernden Ruhezustand gehalten werden.

In Ausführungsformen der Erfindung kann die Ladeleistung für die erste Speicherzelle des aktiven Betriebsmodus in Abhängigkeit von ihrem Ladezustand (d.h. ihrer Restkapazität) angepasst werden. Beispielsweise kann die Ladeleistung für die erste Speicherzelle bei fast vollständig entladener oder fast vollständig geladener erster Speicherzelle reduziert werden, um Schäden an der ersten Speicherzelle durch zu große Ladeleistung zu vermeiden. Zur Aufnahme überschüssiger Leistung von der externen Quelle kann die dritte Speicherzelle vorübergehend geladen (d.h. aktiviert und geladen) werden. Durch diese bedarfsabhängige Aufladung der dritten Speicherzelle bei extremen Ladezuständen der ersten Speicherzelle können Schäden an der ersten Speicherzelle durch zu intensive Aufladung vermieden werden.

In Ausführungsformen der Erfindung kann ein weiter Betriebsmodus bereitgestellt werden, in dem zumindest eine der Speicherzellen des Energiespeichers in einem Ruhezustand gehalten wird. Beispielsweise können alle Speicherzellen des Energiespeichers in dem Ruhezustand gehalten werden. Der Ruhezustand kann einem Zustand entsprechen, in dem die Zellspannung auf einem dritten Spannungsniveau gehalten wird, das zwischen der Entladespannung und der Ladespannung, bzw. zwischen den ersten und zweiten Spannungsniveaus, liegt. Alternativ oder zusätzlich kann der Ruhezustand einem Zustand entsprechen, in dem der Ladezustand (Restkapazität) auf einem vorgegebenen Wert, beispielsweise einem Wert zwischen den ersten und zweiten Schwellwerten, gehalten wird. Hierzu kann anfangs eine gezielte Entladung oder gezielte Aufladung der entsprechenden Speicherzelle durchgeführt werden.

Entsprechend wird ein Betriebsmodus bereitgestellt, der für den Fall, dass der Energiespeicher vorübergehend weder zur Aufnahme noch zur Abgabe von Energie (Leistung) benötigt wird, die Speicherzellen des Energiespeichers durch geeignete Wahl der Zellspannung und/oder des Ladezustands in einem schonenden, die Lebensdauer der entsprechenden Speicherzellen verlängernden Ruhezustand hält.

Gemäß einem zweiten Aspekt der Erfindung wird eine Steuerungseinrichtung für das Energiemanagement (d.h. Lade- und Entlademanagement, bzw. Speichermanagement oder Batteriemanagement) eines Energiespeichers vorgeschlagen. Der Energiespeicher umfasst zumindest zwei Speicherzellen und kann Energie (Leistung) an eine externe elektrische Last abgeben und Energie (Leistung) von einer externen Quelle (Energiequelle) aufnehmen. Die Lastleistung der externen elektrischen Last kann abschnittsweise die Leistung der externen elektrischen Quelle übersteigen, so dass eine Abgabe von Energie durch den Energiespeicher erforderlich ist, und die Lastleistung der externen elektrischen Last kann abschnittsweise die Leistung der externen elektrischen Quelle unterschreiten, so dass eine Aufnahme von Energie durch den Energiespeicher erforderlich ist. Abschnitte, in denen eine Abgabe von Energie durch den Energiespeicher erforderlich ist, und Abschnitte, in denen eine Aufnahme von Energie durch den Energiespeicher erforderlich ist, können sich in zeitlicher Folge, ggf. schneller zeitlicher Abfolge (z.B. mehrmals pro Stunde), abwechseln. Bei den Speicherzellen kann es sich um elektrochemische Speicherzellen handeln, d.h. um Akkumulatoren (Batterien), wie beispielsweise Lithium-Ionen-Akkumulatoren oder Bleiakkumulatoren. Die Speicherzellen müssen nicht zwingend gleichen Typs sein. Die Steuerungseinrichtung ist dazu ausgestaltet, zumindest zwei verschiedenen Betriebsmoden für das Energiemanagement bereitzustellen. Dabei kann zu jedem Zeitpunkt jeweils nur einer der Betriebsmoden aktiv sein. In jedem Betriebsmodus wird eine der Speicherzellen des Energiespeichers als eine erste Speicherzelle verwendet (betrieben), und eine weitere Speicherzelle des Energiespeichers als eine zweite Speicherzelle verwendet (betrieben). Die Steuerungseinrichtung ist ferner dazu ausgestaltet, in nur einer der Betriebsmoden aktiv sein. In jedem Betriebsmodus wird eine der Speicherzellen des Energiespeichers als eine erste Speicherzelle verwendet (betrieben), und eine weitere Speicherzelle des Energiespeichers als eine zweite Speicherzelle verwendet (betrieben). Die Steuerungseinrichtung ist ferner dazu ausgestaltet, in jedem Betriebsmodus bei Aufnahme von Energie (Leistung) durch den Energiespeicher von der externen Quelle ausschließlich die erste Speicherzelle zu laden, und bei Abgabe von Energie (Leistung) durch den Energiespeicher an die externe elektrische Last ausschließlich die zweite Speicherzelle zu entladen. Das heißt, die jeweilige erste Speicherzelle wird für einen Ladevorgang bereitgestellt, so dass bei erforderlicher Aufnahme von Energie durch den Energiespeicher von der externen Quelle ausschließlich die erste Speicherzelle geladen wird, und die jeweilige zweite Speicherzelle wird für einen Entladevorgang bereitgestellt, so dass bei erforderlicher Abgabe von Energie durch den Energiespeicher an die externe elektrische Last ausschließlich die zweite Speicherzelle entladen wird. Die Steuerungseinrichtung ist ferner dazu ausgestaltet, zwischen den Betriebsmoden in Abhängigkeit von der Restkapazität (d.h. dem Ladezustand) zumindest einer der ersten und zweiten Speicherzellen des jeweils aktiven Betriebsmodus umzuschalten (zu wechseln).

Die Steuerungseinrichtung ist dazu ausgestaltet, in jedem Betriebsmodus die jeweilige erste Speicherzelle (bzw. deren Zellspannung) auf einem ersten Spannungsniveau zu halten, das im Wesentlichen der Ladespannung der Speicherzellen entspricht. Das erste Spannungsniveau kann um bis zu eine vorbestimmte erste Spannungsdifferenz unterhalb der Ladespannung liegen. Die erste Spannungsdifferenz ist dabei vorzugsweise klein gegenüber der Differenz zwischen Ladespannung und Entladespannung gewählt, wobei die Ladespannung diejenige Spannung ist, bei deren Überschreitung durch die an der Speicherzelle anliegende Spannung die Speicherzelle geladen wird, und die Entladespannung diejenige Spannung ist, bei deren Unterschreitung durch die an der Speicherzelle anliegende Spannung die Speicherzelle entladen wird.

Weiterhin ist die Steuerungseinrichtung dazu ausgestaltet, in jedem Betriebsmodus die jeweilige zweite Speicherzelle (bzw. deren Zellspannung) auf einem zweiten Spannungsniveau zu halten, das im Wesentlichen der Entladespannung der Speicherzellen entspricht. Das zweite Spannungsniveau kann dabei um bis zu eine vorbestimmte zweite Spannungsdifferenz oberhalb der Entladespannung liegen. Vorzugsweise sind die erste Spannungsdifferenz und gegebenenfalls die zweite Spannungsdifferenz so gewählt (z.B. jeweils klein gegenüber der Differenz zwischen Ladespannung und Entladespannung), dass das erste Spannungsniveau stets oberhalb des zweiten Spannungsniveaus liegt.

In Ausführungsformen der Erfindung kann die Steuerungseinrichtung dazu ausgestaltet sein, zwischen den Betriebsmoden umzuschalten, wenn der Ladungszustand der jeweiligen ersten Speicherzelle des aktiven Betriebsmodus einen vorbestimmten ersten Schwellwert erreicht oder überschreitet. Dabei ist vorausgesetzt, dass die Restkapazität der ersten Speicherzelle anfangs unterhalb des ersten Schwellwerts liegt. Der erste Schwellwert bezeichnet eine obere Grenze für die Restkapazität bzw. den Ladezustand. Der erste Schwellwert kann z.B. im Wesentlichen vollständiger Ladung der Speicherzelle entsprechen.

Bevorzugt ist die Steuerungseinrichtung weiterhin dazu ausgestaltet, bei Erreichen oder Überschreiten des ersten Schwellwerts durch die Restkapazität der jeweiligen ersten Speicherzelle des aktiven Betriebsmodus in einen (neuen) Betriebsmodus zu wechseln, in dem eine Speicherzelle des Energiespeichers mit niedrigerer Restkapazität als die bisherige erste Speicherzelle als neue erste Speicherzelle betrieben wird. Zugleich kann in dem (neuen) Betriebsmodus, in den gewechselt wird, eine Speicherzelle des Energiespeichers mit höherer Restkapazität als die bisherige zweite Speicherzelle als neue zweite Speicherzelle betrieben werden.

Schwellwert bezeichnet eine untere Grenze für die Restkapazität bzw. den Ladezustand. Der zweite Schwellwert kann z.B. im Wesentlichen vollständiger Entladung der Speicherzelle entsprechen. Vorzugsweise sind die ersten und zweiten Schwellwerte dabei so gewählt, dass der erste Schwellwert oberhalb des zweiten Schwellwerts liegt, also größerer Restkapazität entspricht als der zweite Schwellwert.

Bevorzugt ist die Steuerungseinrichtung dazu ausgestaltet, bei Erreichen oder Unterschreiten des zweiten Schwellwerts durch die Restkapazität der jeweiligen zweiten Speicherzelle des aktiven Betriebsmodus in einen (neuen) Betriebsmodus zu wechseln, in dem eine Speicherzelle des Energiespeichers mit höherer Restkapazität als die bisherige zweite Speicherzelle als neue zweite Speicherzelle betrieben wird. Zugleich kann in dem (neuen) Betriebsmodus, in den gewechselt wird, eine Speicherzelle des Energiespeichers mit niedrigerer Restkapazität als die bisherige erste Speicherzelle als neue erste Speicherzelle betrieben werden.

Es ist weiterhin vorteilhaft, wenn die Steuerungseinrichtung dazu ausgestaltet ist, zur Aufrechterhaltung des ersten Spannungsniveaus für die erste Speicherzelle des aktiven Betriebsmodus Energie von der zweiten Speicherzelle des aktiven Betriebsmodus an die erste Speicherzelle zu übertragen, d.h. die zweite Speicherzelle zur Aufrechterhaltung des ersten Spannungsniveaus für die erste Speicherzelle zu entladen.

In Ausführungsformen der Erfindung können beim Umschalten von einem ersten der zumindest zwei Betriebsmoden zu einem zweiten der zumindest zwei Betriebsmoden die jeweils ersten und zweiten Speicherzellen ihre Rollen tauschen. Mit anderen Worten entspricht in diesem Fall die erste Speicherzelle des ersten Betriebsmodus der zweiten Speicherzelle des zweiten Betriebsmodus, und die zweite Speicherzelle des ersten Betriebsmodus entspricht der ersten Speicherzelle des zweiten Betriebsmodus.

In Ausführungsformen der Erfindung kann, sofern der Energiespeicher mehr als zwei Speicherzellen umfasst, die Steuerungseinrichtung dazu ausgestaltet sein, in zumindest einem der Betriebsmoden zumindest eine der Speicherzellen als eine dritte Speicherzelle zu betreiben. Beispielsweise können alle Speicherzellen des Energiespeichers, die nicht als erste Speicherzellen oder als zweite Speicherzellen betrieben werden, als dritte Speicherzellen betrieben werden. Die jeweilige dritte Speicherzelle kann dabei in einem Ruhezustand gehalten werden. Der Ruhezustand kann einem Zustand entsprechen, in dem die Zellspannung auf einem dritten Spannungsniveau gehalten wird, das zwischen den ersten und zweiten Spannungsniveaus liegt. Alternativ oder zusätzlich kann der Ruhezustand einem Zustand entsprechen, in dem der Ladezustand (Restkapazität) auf einem vorgegebenen Wert, beispielsweise zwischen den ersten und zweiten Schwellwerten, gehalten wird. Hierzu kann die Steuerungseinrichtung dazu ausgestaltet sein, anfangs eine gezielte Entladung oder gezielte Aufladung der entsprechenden Speicherzelle durchzuführen.

In Ausführungsformen der Erfindung kann die Steuerungseinrichtung dazu ausgestaltet sein, die Ladeleistung für die erste Speicherzelle des aktiven Betriebsmodus in Abhängigkeit von ihrem Ladezustand (d.h. ihrer Restkapazität) anzupassen. Beispielsweise kann die Ladeleistung für die erste Speicherzelle bei fast vollständig entladener oder fast vollständig geladener erster Speicherzelle reduziert werden, um Schäden an der ersten Speicherzelle durch zu große Ladeleistung zu vermeiden. Zur Aufnahme überschüssiger Leistung von der externen Quelle kann die Steuerungseinrichtung dazu ausgestaltet sein, die dritte Speicherzelle vorübergehend zu laden (d.h. zu aktivieren und laden).

In Ausführungsformen der Erfindung kann die Steuerungseinrichtung dazu ausgestaltet sein, einen weiteren Betriebsmodus bereitzustellen, in dem zumindest eine der Speicherzellen des Energiespeichers als dritte Speicherzelle betrieben und so in einem Ruhezustand gehalten wird. Beispielsweise können alle Speicherzellen des Energiespeichers in dem Ruhezustand gehalten werden. Der Ruhezustand kann einem Zustand entsprechen, in dem die Zellspannung auf einem dritten Spannungsniveau gehalten wird, das zwischen den ersten und zweiten Spannungsniveaus liegt. Alternativ oder zusätzlich kann der Ruhezustand einem Zustand entsprechen, in dem der Ladezustand (Restkapazität) auf einem vorgegebenen Wert, beispielsweise einem Wert zwischen den ersten und zweiten Schwellwerten, gehalten wird. Hierzu kann die Steuerungseinrichtung dazu ausgestaltet sein, anfangs eine gezielte Entladung oder gezielte Aufladung der entsprechenden Speicherzelle durchzuführen.

Die Begriffe Akkumulator und Batterie werden im Folgenden synonym zueinander verwendet.

### Kurze Beschreibung der Zeichnung

Weitere vorteilhafte Ausgestaltungen, auf die jedoch die Erfindung in ihrem Umfang nicht beschränkt ist, ergeben sich aus der folgenden Beschreibung anhand der Zeichnung. Identische Elemente sind dabei in den Figuren mit identischen Bezugszeichen versehen, und es wird auf Wiederholung der Beschreibung bereits beschriebener Elemente verzichtet. Es zeigen im Einzelnen:
**Figur 1** eine beispielhafte schematische Darstellung einer Anordnung umfassend eine Batterie, einen Generator und eine elektrische Last,
**Figur 2** eine beispielhafte schematische Darstellung der Verläufe von Generator-, Last- und Batterieleistung, sowie des Ladezustands der Batterie in der Anordnung gemäß **Figur 1**,
**Figur 3** eine beispielhafte schematische Darstellung einer Anordnung umfassend eine Batterie mit mehreren Batteriezellen, einen Generator und eine elektrische Last, gemäß Ausführungsformen der Erfindung, und
**Figur 4** eine beispielhafte schematische Darstellung der Verläufe von Generator-, Last- und Batterieleistung, sowie des Ladezustands der Batteriezellen in der erfindungsgemäßen Anordnung gemäß **Figur 3**.

### Ausführliche Beschreibung der Erfindung

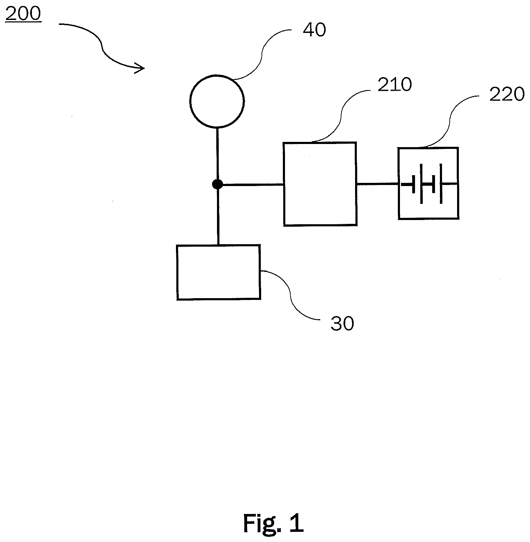

**Figur 1** zeigt eine Anordnung 200 umfassend eine Batterie (Akkumulator) 220 als Beispiel für einen Energiespeicher, einen Generator 40 als Beispiel für eine Quelle bzw. Energiequelle, eine elektrische Last 30, und eine Vorrichtung (Steuerungseinrichtung) 210 für das Energiemanagement (Batteriemanagement) der Batterie 220. Bei Abgabe von elektrischer Energie (Leistung) durch den Generator 40 wird die Batterie 220 unter Kontrolle der Steuerungseinrichtung 210 geladen, und bei Aufnahme von elektrischer Energie (Leistung) durch die Last 30 wird die Batterie 220 unter Kontrolle der Steuerungseinrichtung 210 entladen.

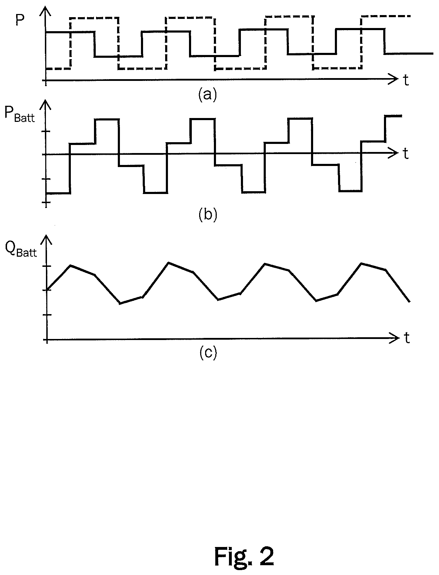

In **Figur 2** sind in den Zeilen (a) bis (c) beispielhaft der Verläufe von Generator-, Last- und Batterieleistung, sowie des Ladezustands der Batterie 220 in der Anordnung 100 gezeigt. Zeile (a) zeigt dabei den Verlauf von Generatorleistung (durchgezogene Linie) und Lastleistung (gestrichelte Linie). In dem gewählten Beispiel übersteigt die Lastleistung abschnittsweise die Generatorleistung, so dass eine Entladung der Batterie 220 zur Bereitstellung der Differenz aus Lastleistung und Generatorleistung erforderlich ist, und unterschreitet abschnittsweise die Generatorleistung, so dass die Batterie 220 zur Aufnahme des Leistungsüberschusses geladen wird. Ein derartiger Verlauf von Lastleistung und Generatorleistung kann beispielsweise in Mikro-KWK für den gebäudeintegrierten Einsatz auftreten.

Entsprechend zeigt Zeile (b) den Verlauf der Batterieleistung P_{Batt} (d.h. der von der Batterie abgegebenen Leistung), die im Wesentlichen der Differenz aus Lastleistung und Generatorleistung entspricht. Die Batterieleistung ist abwechselnd positiv und negativ, d.h. die Batterie 220 wird im Wechsel entladen und geladen. Der resultierende Ladezustand (Restkapazität) Q_{Batt} ist in Zeile (c) dargestellt. Entsprechend den Vorzeichenwechseln der Batterieleistung fällt und steigt die Restkapazität der Batterie 220 im Wechsel.

In der praktischen Anwendung können die Abschnitte, in denen die Lastleistung die Generatorleistung überschreitet, und die Abschnitte, in denen die Lastleistung die Generatorleistung unterschreitet, kurz sein und daher in schneller Abfolge alternieren. Entsprechend kann es zu vielen kurzzeitigen Lade- und Entladevorgängen (Zyklen) der Batterie 220 mit entsprechend geringen relativen Änderungen der Restkapazität kommen (z.B. vier Zyklen im Beispiel der **Figur 2**), d.h. Mikrozyklen können auftreten.

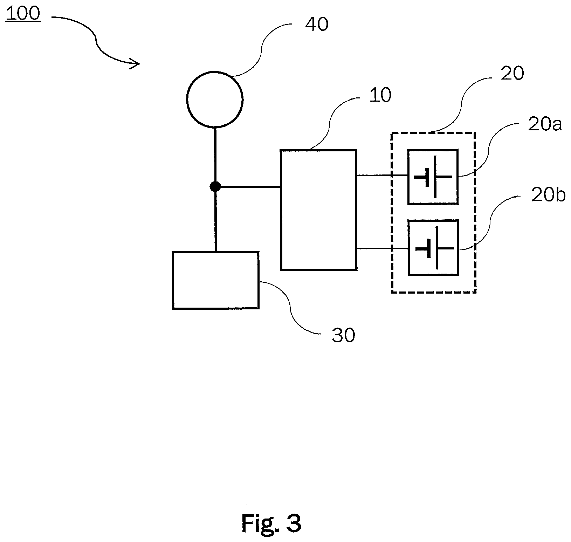

Die **Figur 3** zeigt eine Anordnung 100 in der solche Mikrozyklen erfindungsgemäß vermieden werden können. Die Anordnung 100 umfasst einen Energiespeicher 20 (beispielsweise einen elektrochemischen Energiespeicher, insbesondere eine Batterieanordnung), einen Generator 40 als Beispiel für eine Quelle bzw. Energiequelle, eine elektrische Last 30, und eine Vorrichtung (Steuerungseinrichtung) 10 für das Energiemanagement (Batteriemanagement) des Energiespeichers 20. der Energiespeicher 20 kann unter der Kontrolle der Steuerungseinrichtung 10 Energie (Leistung) an die elektrische Last 30 abgeben und Energie (Leistung) von dem Generator 40 aufnehmen. Die Unterschiede zur Anordnung 100 in **Figur 1** liegen in der Ausgestaltung der Steuerungseinrichtung 10 und des Energiespeichers 20. Der Energiespeicher 20 umfasst zumindest zwei (parallel geschaltete) Speicherzellen 20a, 20b, wobei die Gesamtkapazität des Energiespeichers 20 durch die Summe der Einzelkapazitäten der Speicherzellen 20a, 20b gegeben ist. Bei den Speicherzellen 20a, 20b kann es sich beispielsweise um Akkumulatoren (Batterien) zur elektrochemischen Speicherung elektrischer Energie handeln. Es ist vorteilhaft aber nicht zwingend erforderlich, dass die Speicherzellen 20a, 20b des Energiespeichers 20 vom gleichen Typ sind (also z.B. gleichartige Lithium-Ionen-Akkumulatoren sind).

Konventionell werden parallel geschaltete Speicherzellen verwendet, um die Gesamtkapazität des Energiespeichers zu erhöhen. Der vorliegenden Erfindung liegt die Idee zugrunde, die Speicherzellen derart wechselseitig zu betreiben, dass, zusätzlich zur Erhöhung der Gesamtkapazität, Mikrozyklen der Speicherzellen vermieden werden. Die Steuerungseinrichtung 10 ist zur Durchführung eines entsprechenden Verfahrens für das Energiemanagement (d.h. Lade- und Entlademanagement, bzw. Speichermanagement oder Batteriemanagement) des Energiespeichers 20 ausgestaltet, das im Folgenden näher beschrieben werden soll.

Allgemein ausgedrückt beruht das Verfahren auf mindestens zwei Speicherzellen, die wechselseitig betrieben werden. Eine erste der Speicherzellen wird über einen optimalen Zyklus hinweg im Zustand der Ladung oder Standby gehalten, d.h. die Spannung an dieser Speicherzelle wird über die Elektronik (d.h. Steuerungseinrichtung) so hoch gehalten, dass keine Entladung auftritt. Eine zweite der Speicherzellen wird über den optimalen Zyklus hinweg im Zustand der Entladung oder Standby gehalten, d.h. die Spannung an dieser Speicherzelle wird so niedrig gehalten, dass keine Ladung auftritt. Beide Speicherzellen werden dabei im Betrieb gehalten, d.h. keine der beiden Speicherzellen wird freigeschaltet. Weiterhin werden die Spannungen an den beiden Speicherzellen auf den angegebenen Niveaus gehalten, auch wenn keine Leistung von einer externen Quelle zur Verfügung gestellt wird. Dazu kann es erforderlich sein, in geringem Umfang Energie von einer Speicherzelle auf die andere Speicherzelle zu übertragen, z.B. von der zweiten Speicherzelle auf die erste Speicherzelle. Der optimale Zyklus kann dabei frei gewählt werden und bis zur maximalen Entladung der zweiten Speicherzelle reichen. Typischerweise würde für den Fall einer Lithium-Ionen-Batterie als Speicherzelle eine optimale Zyklentiefe von etwa 50% gewählt werden, für den Fall einer Bleibatterie eine Zyklentiefe von etwa 40%. Durch das vorgeschlagene Verfahren wird daher stets eine vorgegebene Mindestentladung pro Zyklus gewährleistet und so das Auftreten von Mikrozyklen vermieden. Insbesondere wird durch das vorgeschlagene Verfahren ein Entladen der Speicherzellen während des Auftretens des sogenannten "Refreshing"-Effekts vermieden, bei dem die Zellspannung nach vollständiger Entladung zunächst wieder ansteigt, und somit eine teilweise geladene Speicherzelle vortäuscht.

Das vorgeschlagene Verfahren für das Energiemanagement besitzt zumindest zwei Betriebsmoden, von denen jeweils nur ein Betriebsmodus gleichzeitig aktiv sein kann. In jedem Betriebsmodus wird eine der Speicherzellen des Energiespeichers 20 als eine erste Speicherzelle definiert (bzw. als eine solch verwendet oder betrieben) und eine weitere (von der ersten verschiedene) Speicherzelle also eine zweite Speicherzelle definiert (bzw. als eine solch verwendet oder betrieben). In jedem Betriebsmodus fungiert also eine Speicherzelle als erste Speicherzelle, und eine weiter Speicherzelle als zweite Speicherzelle. Die einzelnen Betriebsmoden unterscheiden sich durch die ihnen zugeordneten ersten und zweiten Speicherzellen. Ein Wechsel zwischen den Betriebsmoden erfolgt in Abhängigkeit von der Restkapazität der jeweils aktuellen ersten Speicherzelle (d.h. der ersten Speicherzelle des aktiven Betriebsmodus) und/oder in Abhängigkeit von der Restkapazität der jeweils aktuellen zweiten Speicherzelle (d.h. der zweiten Speicherzelle des aktiven Betriebsmodus).

In jedem dieser Betriebsmoden wird nun ausschließlich die erste Speicherzelle für einen Ladevorgang und ausschließlich die zweite Speicherzelle für einen Entladevorgang bereitgestellt. Mit anderen Worten wird ausschließlich die erste Speicherzelle geladen, und zudem wird die erste Speicherzelle nicht entladen. Weiterhin wird ausschließlich die zweite Speicherzelle entladen, und zudem wird die zweite Speicherzelle nicht aufgeladen. Der Ladevorgang der ersten Speicherzelle wird immer dann ausgeführt, wenn eine Aufnahme von Energie (Leistung) durch den Energiespeicher 20 erforderlich wird. Der Entladevorgang wird immer dann ausgeführt, wenn eine Abgabe von Energie (Leistung) durch den Energiespeicher 20 erforderlich wird.

Um sicherzustellen, dass die erste Speicherzelle für den Ladevorgang (d.h. für die Aufnahme von Energie (Leistung)) bereitsteht und zudem nicht entladen wird, wird die Zellspannung der ersten Speicherzelle auf einem ersten Spannungsniveau gehalten, das (im Wesentlichen) der Ladespannung der ersten Speicherzelle entspricht. Um sicherzustellen, dass die zweite Speicherzelle für den Entladevorgang (d.h. für die Abgabe von Energie (Leistung)) bereitsteht und zudem nicht aufgeladen wird, wird die Zellspannung der zweiten Speicherzelle auf einem zweiten Spannungsniveau gehalten, das (im Wesentlichen) der Entladespannung der zweiten Speicherzelle entspricht.

Mit Ladespannung wird vorliegend diejenige Spannung bezeichnet, bei deren Überschreitung durch die jeweilige Zellspannung die jeweilige Speicherzelle aufgeladen wird. Mit Entladespannung wird vorliegend diejenige Spannung bezeichnet, bei deren Unterschreitung durch die jeweilige Zellspannung die jeweilige Speicherzelle entladen wird. Es versteht sich, dass unterschiedliche Typen von Speicherzellen unterschiedliche (d.h. spezifische) Ladespannungen und Entladespannungen besitzen können, und sich die obigen Ausführungen auf die für die betreffenden Speicherzellen jeweils anwendbaren Ladespannungen und Entladespannungen beziehen. Entsprechend können unterschiedlichen Typen von Speicherzellen unterschiedliche (d.h. spezifische) erste und zweite Spannungsniveaus, und damit auch unterschiedliche (d.h. spezifische) unten beschriebene dritte Spannungsniveaus zugewiesen sein.

In Zeitabschnitten, in denen keine Leistung von der externen Quelle 40 bereitgestellt wird bzw. die Leistungsaufnahme der elektrischen Last 30 die Leistungsabgabe der externen Quelle 40 übersteigt, kann es das Aufrechterhalten des ersten Spannungsniveaus an der ersten Speicherzelle erforderlich machen, Energie von der zweiten Speicherzelle an die erste Speicherzelle zu übertragen, d.h. die zweite Speicherzelle zugunsten der ersten Speicherzelle zu entladen.

Das erste Spannungsniveau kann gegebenenfalls um bis zu eine vorbestimmte erste Spannungsdifferenz unterhalb der Ladespannung liegen und das zweite Spannungsniveau kann gegebenenfalls um bis zu eine vorbestimmte zweite Spannungsdifferenz oberhalb der Entladespannung liegen. In jedem Fall liegt aber das erste Spannungsniveau höher als das zweite Spannungsniveau. Die ersten und/oder zweiten Spannungsdifferenzen sind dabei vorzugsweise klein gegenüber der Differenz zwischen Ladespannung und Entladespannung für die jeweilige Speicherzelle gewählt. Anders ausgedrückt ist das erste Spannungsniveau so gewählt, dass die erste Speicherzelle im Zustand der Ladung oder Standby gehalten wird, und das zweite Spannungsniveau ist so gewählt, dass die zweite Speicherzelle im Zustand der Entladung oder Standby gehalten wird.

Die Höhe der jeweils an den ersten und zweiten Speicherzellen anliegenden Spannungen wird durch die Steuerungseinrichtung 10 vorgegeben, die als übergeordnetes Energiespeicher-Managementsystem fungiert. Die Steuerungseinrichtung 10 ist entsprechend dazu ausgestaltet, die jeweiligen Zellspannungen der Speicherzellen (insbesondere der jeweils aktiven ersten und zweiten Speicherzellen) zu überwachen.

Aufgrund der vorbeschriebenen Ausgestaltung des erfindungsgemäßen Verfahrens und der erfindungsgemäßen Steuerungseinrichtung 10 wird in jedem Betriebsmodus die erste Speicherzelle bevorzugt geladen und die zweite Speicherzelle bevorzugt entladen. Hierdurch werden für jede der beiden Speicherzellen Mikrozyklen vermieden. Weitere, von den jeweiligen ersten und zweiten Speicherzellen verschiedene Speicherzellen des Energiespeichers 20 (d.h. zumindest eine, einige, oder alle weiteren) können in jedem der beschriebenen Betriebsmoden als dritte Speicherzellen betrieben werden, die im Standby-Zustand oder Schlafmodus (bzw. Ruhezustand) gehalten werden. Der Ruhezustand ist dabei definiert durch einen vorgegebenen Ladezustand (Restkapazität) und/oder eine vorgegebene Zellspannung. Durch geeignete Wahl des Ladezustands und/oder der Zellspannung kann die Lebensdauer dieser Speicherzellen verlängert werden. Der vorgegebene Ladezustand im Ruhezustand liegt bevorzugt zwischen den unten beschriebenen ersten und zweiten Schwellwerten. Für den Fall einer Lithium-Ionen-Batterie hat sich ein Ladezustand von 80% bis 90% als vorteilhaft für die Lebensdauer herausgestellt. Für den Fall einer Bleibatterie liegt ein vorteilhafter Ladezustand zwischen 90% und 100%. Zum Erreichen des vorgegeben Ladezustands kann, bei anfangs zu hoher Restkapazität, die jeweilige erste Speicherzelle auf Kosten der jeweiligen dritten Speicherzelle aufgeladen werden und/oder Energie (Leistung) von der jeweiligen dritten Speicherzelle an die elektrische Last 30 abgegeben werden. Bei anfangs zu niedriger Restkapazität der jeweiligen dritten Speicherzelle kann diese auf Kosten der zweiten Speicherzelle aufgeladen werden und/oder Energie (Leistung) von der externen Quelle 40 aufnehmen. Die Zellspannung im Ruhezustand kann einem dritten Spannungsniveau entsprechen, das bevorzugt zwischen der Entladespannung und der Ladespannung, bzw. zwischen den ersten und zweiten Spannungsniveaus liegt. In jedem Fall ist das dritte Spannungsniveau so gewählt, dass eine Entladung der dritten Speicherzelle mit der Zeit verhindert wird. Zur Aufrechterhaltung des dritten Spannungsniveaus kann Energie von der jeweiligen zweiten Speicherzelle auf die jeweilige dritte Speicherzelle übertragen werden. Alternativ kann die jeweilige dritte Speicherzelle spannungsfrei gehalten werden.

Zusätzlich können Speicherzellen, die im aktiven Betriebsmodus als dritte Speicherzellen betrieben werden, bedarfsabhängig verwendet werden, um überschüssige Leistung von der externen Quelle (d.h. Leistung, die nicht von der jeweiligen ersten Speicherzelle aufgenommen werden kann) aufzunehmen. Ein solcher Fall kann auftreten, wenn die Ladeleistung für die erste Speicherzelle des aktiven Betriebsmodus in Abhängigkeit von ihrem Ladezustand (d.h. ihrer Restkapazität) reduziert werden muss, um Schäden an der ersten Speicherzelle zu vermeiden. Beispielsweise kann es nötig sein, die Ladeleistung für die erste Speicherzelle bei fast vollständiger Ladung oder fast vollständiger Entladung zu reduzieren. Zur Aufnahme der bei Reduzierung der Ladeleistung der ersten Speicherzelle auftretenden überschüssigen Leistung kann vorübergehend die dritte Speicherzelle des aktiven Betriebsmodus geladen werden.

Wie oben angegeben, erfolgt erfindungsgemäß ein Umschalten zwischen den Betriebsmoden in Abhängigkeit von der Restkapazität der jeweils ersten und/oder zweiten Speicherzelle des aktiven Betriebsmodus.

Beispielsweise kann ein Umschalten zwischen Betriebsmoden erfolgen, sobald die Restkapazität der ersten Speicherzelle des aktiven Betriebsmodus durch Aufladung einen vorgegebenen ersten Schwellwert erreicht oder überschreitet. Der erste Schwellwert kann dabei z.B. vollständiger oder neunzigprozentiger Ladung, oder einem zwischen diesen Werten liegenden Wert entsprechen. In diesem Fall wird in einen neuen Betriebsmodus gewechselt, in dem eine Speicherzelle des Energiespeichers 20 als (neue) erste Speicherzelle betrieben wird, die eine niedrigere Restkapazität aufweist als die (vormalige) erste Speicherzelle des vormaligen Betriebsmodus, bzw. deren Restkapazität unterhalb des ersten Schwellwerts liegt. Bei der zweiten Speicherzelle in dem vormaligen Betriebsmodus und in dem neuen Betriebsmodus kann es sich um dieselbe Speicherzelle handeln. Allerdings kann der neue Betriebsmodus ferner so gewählt werden, dass die Speicherzelle, die als neue zweite Speicherzelle fungiert, eine größere Restkapazität aufweist als die (vormalige) zweite Speicherzelle des vormaligen Betriebsmodus.

Alternativ oder zusätzlich kann ein Umschalten zwischen Betriebsmoden erfolgen, sobald die Restkapazität der zweiten Speicherzelle des aktiven Betriebsmodus durch Entladung einen vorgegebenen zweiten Schwellwert erreicht oder unterschreitet. Der zweite Schwellwert kann dabei z.B. vollständiger oder neunzigprozentiger Entladung, oder einem zwischen diesen Werten liegenden Wert entsprechen. In diesem Fall wird in einen Betriebsmodus gewechselt, in dem eine Speicherzelle des Energiespeichers 20 als (neue) zweite Speicherzelle betrieben wird, die eine größere Restkapazität aufweist als die (vormalige) zweite Speicherzelle des vormaligen Betriebsmodus, bzw. deren Restkapazität oberhalb des zweiten Schwellwerts liegt. Bei der ersten Speicherzelle in dem vormaligen Betriebsmodus und in dem neuen Betriebsmodus kann es sich um dieselbe Speicherzelle handeln. Allerdings kann der neue Betriebsmodus ferner so gewählt werden, dass die Speicherzelle, die als neue erste Speicherzelle fungiert, eine niedrigere Restkapazität aufweist als die (vormalige) erste Speicherzelle des vormaligen Betriebsmodus.

Es versteht sich, dass unterschiedlichen Typen von Speicherzellen unterschiedliche (d.h. spezifische) erste und zweite Schwellwerte für die Restkapazität zugewiesen sein können. In einem solchen Fall beziehen sich die obigen Ausführungen auf die jeweils für den Typ der betreffenden Speicherzelle geltenden (spezifischen) ersten und zweiten Schwellwerte für die Restkapazität. Zu beachten ist aber, dass für jeden möglichen Typ von Speicherzellen der erste Schwellwert oberhalb des zweiten Schwellwerts liegt. Es versteht sich weiterhin, dass unterschiedlichen Typen von Speicherzellen unterschiedliche (d.h. spezifische) vorgegebene Ladezustände für den Ruhezustand zugewiesen sein können. In einem solchen Fall beziehen sich die obigen Ausführungen auf den jeweils für den Typ der betreffenden Speicherzelle geltenden (spezifischen) Ladezustand. In jedem Fall jedoch liegt der vorgegebene Ladezustand für den Ruhezustand zwischen den jeweiligen ersten und zweiten Schwellwerten.

Das Umschalten zwischen den Betriebsmoden erfolgt unter Kontrolle der Steuerungseinrichtung 10. Die Steuerungseinrichtung 10 ist entsprechend dazu ausgestaltet, die jeweiligen Restkapazitäten der Speicherzellen (insbesondere der jeweils aktiven ersten und zweiten Speicherzellen) zu überwachen.

Ein besonderer Fall ergibt sich, wenn die erste Speicherzelle des vormaligen Betriebsmodus gleichzeitig als zweite Speicherzelle des neuen Betriebsmodus, und die zweite Speicherzelle des vormaligen Betriebsmodus gleichzeitig als erste Speicherzelle des neuen Betriebsmodus fungiert. Das entsprechende Verfahren ist damit insbesondere auf Energiespeicher anwendbar, die lediglich zwei Speicherzellen aufweisen. Diese beiden Speicherzellen tauschen dann beim Umschalten zwischen den Betriebsmoden ihre Rollen hinsichtlich Ladung und Entladung. Die Zahl der Betriebsmoden des Verfahrens bzw. der Steuerungseinrichtung 10 kann in diesem Fall auf zwei Betriebsmoden, zwischen denen abgewechselt wird, beschränkt sein.

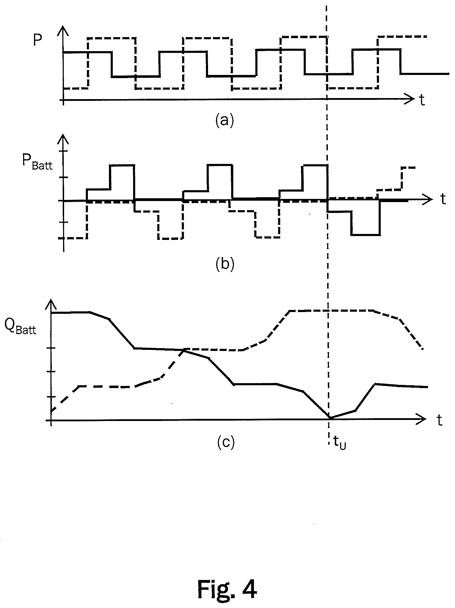

Figur 4 betrifft den Fall eines Rollentauschs der ersten und zweiten Speicherzellen beim Umschalten von einem ersten Betriebsmodus in einen zweiten Betriebsmodus. Zur Verdeutlichung sei eine der Speicherzelle des Energiespeichers 20 als Speicherzelle A bezeichnet, eine weitere Speicherzelle des Energiespeichers 20 als Speicherzelle B. Die Speicherzelle A soll der ersten Speicherzelle des ersten Betriebsmodus und der zweiten Speicherzelle des zweiten Betriebsmodus entsprechen, und die Speicherzelle B soll der zweiten Speicherzelle des ersten Betriebsmodus und der ersten Speicherzelle des zweiten Betriebsmodus entsprechen.

In den Zeilen (a) bis (c) der Figur 4 sind beispielhaft der Verläufe von Generator- und Lastleistung, sowie die Batterieleistung und der Ladezustand der jeweils ersten und zweiten Speicherzelle für den oben angegebenen Fall gezeigt. Zeile (a) zeigt dabei wieder den Verlauf von Generatorleistung (durchgezogene Linie) und Lastleistung (gestrichelte Linie). In dem gewählten Beispiel, das dem der Figur 2 entspricht, übersteigt die Lastleistung abschnittsweise die Generatorleistung, so dass eine Abgabe von Energie (Leistung) durch den Energiespeicher 20 zur Bereitstellung der Differenz aus Lastleistung und Generatorleistung erforderlich wird, und unterschreitet abschnittsweise die Generatorleistung, so dass eine Aufnahme von Energie (Leistung) durch den Energiespeicher 20 erforderlich wird.

Entsprechend zeigt Zeile (b) die Verläufe der Batterieleistungen P_{Batt} der ersten Speicherzelle (gestrichelte Linie) und der zweiten Speicherzelle (durchgezogene Linie) in dem jeweils aktiven Betriebsmodus (d.h. die Verläufe der von den Speicherzellen jeweils abgegebenen Leistung). Die Summe der beiden Batterieleistungen der ersten Speicherzelle und der zweiten Speicherzelle entspricht dabei im Wesentlichen der Differenz aus Lastleistung und Generatorleistung. Die jeweils resultierenden Ladezustände (Restkapazitäten) Q_{Batt} der ersten Speicherzelle (gestrichelte Linie) und der zweiten Speicherzelle (durchgezogene Linie) sind in Zeile (c) dargestellt.

Anders als im Fall der **Figur 2** ist die Batterieleistung der ersten Speicherzelle des ersten Betriebsmodus (d.h. Speicherzelle A) zunächst durchgehend negativ, unabhängig davon, ob die Lastleistung die Generatorleistung übersteigt. Es erfolgt also Aufladung der ersten Speicherzelle des ersten Betriebsmodus. Gleichzeitig ist die Batterieleistung der zweiten Speicherzelle des ersten Betriebsmodus (d.h. Speicherzelle B) zunächst durchgehend positiv, wieder unabhängig davon, ob die Lastleistung die Generatorleistung übersteigt. Es erfolgt also Entladung der zweiten Speicherzelle des ersten Betriebsmodus. Entsprechend steigt die Restkapazität der ersten Speicherzelle des ersten Betriebsmodus zunächst monoton, während die Restkapazität der zweiten Speicherzelle des ersten Betriebsmodus zunächst monoton abnimmt.

Zum Zeitpunkt t_{U} erreicht die Restkapazität der zweiten Speicherzelle des ersten Betriebsmodus (d.h. Speicherzelle B) den zweiten Schwellwert für die Restkapazität (im vorliegenden Beispiel vollständige Entladung), und es erfolgt ein Umschalten der Betriebsmoden. Entsprechend tauschen die ersten und zweiten Speicherzellen zum Zeitpunkt tu ihre Rollen, wie aus dem weiteren Verlauf der Batterieleistungen ab diesem Zeitpunkt ersichtlich ist. Ab dem Zeitpunkt tu ist wiederum die Batterieleistung der (neuen) ersten Speicherzelle (die der vormaligen zweiten Speicherzelle entspricht, also Speicherzelle B) durchgehend negativ, unabhängig davon, ob die Lastleistung die Generatorleistung übersteigt. Gleichzeitig ist die Batterieleistung der (neuen) zweiten Speicherzelle (die der vormaligen ersten Speicherzelle entspricht, also Speicherzelle A) durchgehend positiv, wieder unabhängig davon, ob die Lastleistung die Generatorleistung übersteigt. Entsprechend steigt die Restkapazität der ersten Speicherzelle des zweiten Betriebsmodus (d.h. Speicherzelle B) monoton, während die Restkapazität der zweiten Speicherzelle des zweiten Betriebsmodus (d.h. Speicherzelle A) monoton abnimmt.

Wie aus einem Vergleich der Zeilen (c) der **Figur 2** und der **Figur 4** folgt, werden erfindungsgemäß Mikrozyklen, also Lade- und Entladevorgänge mit geringem Anteil an der Gesamtkapazität für beide Speicherzellen (Speicherzelle A und Speicherzelle B) vermieden. Insgesamt durchläuft jede der beiden Speicherzellen im Beispiel der **Figur 4** nur einen Zyklus.

Zusätzlich zu den oben beschriebenen Betriebsmoden kann das erfindungsgemäße Verfahren zur Verlängerung der Lebensdauer des Energiespeichers einen weiteren Betriebsmodus (Ruhemodus) aufweisen, in dem zumindest eine Speicherzelle, beispielsweise alle Speicherzellen, in dem oben beschriebenen Ruhezustand gehalten werden, d.h. als dritte Speicherzellen definiert oder betrieben werden. Eine Umschaltung in den Ruhemodus kann (beispielsweise unter Kontrolle der Steuerungseinrichtung 10) erfolgen, falls der Energiespeicher 20 vorübergehend weder zur Aufnahme noch zur Abgabe von Energie (Leistung) benötigt wird. Beispielsweise kann die Steuerungseinrichtung 10 in den Ruhemodus wechseln (umschalten), falls über einen vorgegebenen Zeitraum hinweg dem Energiespeicher 20 weder Energie (Leistung) zugeführt noch entnommen wird. Wie oben beschrieben, kann das Umschalten in den Ruhemodus die Aufladung bzw. Entladung einzelner Speicherzellen erfordern, um den vorgegebenen Ladezustand für jede Speicherzelle, oder zumindest für eine Mehrzahl der Speicherzellen, zu erreichen. Hierzu kann (beispielsweise unter Kontrolle der Steuerungseinrichtung 10) Energie zwischen den Speicherzellen umverteilt werden.

Obenstehend wurde das erfindungsgemäße Verfahren anhand konkreter Ausgestaltungen beschrieben. Soweit nicht gesondert angegeben, soll sich die vorliegende Offenbarung gleichsam auf entsprechende das Verfahren ausführende Vorrichtungen (d.h. insbesondere die Steuerungseinrichtung 10) erstrecken, die zur Durchführung der entsprechenden Verfahrensschritte ausgestaltete Einrichtungen und Mittel umfassen.

Die Erfindung wurde anhand konkreter Ausgestaltungen näher erläutert, ohne auf die konkreten Ausführungsformen begrenzt zu sein. Insbesondere ist es möglich, Merkmale der unterschiedlichen Ausführungsformen zu kombinieren und auch in den anderen Ausführungsformen einzusetzen.

## Patentansprüche

1. Verfahren für das Energiemanagement eines Energiespeichers (20) für elektrische Energie mit zumindest zwei Speicherzellen (20a, 20b), der Energie an eine externe elektrische Last (30) abgeben und Energie von einer externen Quelle (40) aufnehmen kann,
wobei das Verfahren zumindest zwei verschiedene Betriebsmoden für das Energiemanagement aufweist,
wobei in jedem Betriebsmodus eine der Speicherzellen des Energiespeichers (20) als eine erste Speicherzelle betrieben wird, und eine weitere Speicherzelle des Energiespeichers (20) als eine zweite Speicherzelle betrieben wird,
wobei in jedem Betriebsmodus bei Aufnahme von Energie durch den Energiespeicher (20) von der externen Quelle (40) ausschließlich die erste Speicherzelle geladen wird, und bei Abgabe von Energie durch den Energiespeicher an die externe elektrische Last (30) ausschließlich die zweite Speicherzelle entladen wird, und
wobei ein Umschalten zwischen den Betriebsmoden in Abhängigkeit von der Restkapazität zumindest einer der ersten und zweiten Speicherzellen des jeweils aktiven Betriebsmodus erfolgt,
wobei in jedem Betriebsmodus die jeweilige erste Speicherzelle auf einem ersten Spannungsniveau gehalten wird, das im Wesentlichen der Ladespannung der Speicherzellen entspricht; und/oder
wobei in jedem Betriebsmodus die jeweilige zweite Speicherzelle auf einem zweiten Spannungsniveau gehalten wird, das im Wesentlichen der Entladespannung der Speicherzellen entspricht.

2. Verfahren nach Anspruch 1,
wobei die Lastleistung der externen elektrischen Last (30) abschnittsweise die Leistung der externen elektrischen Quelle (40) übersteigt, so dass eine Abgabe von Energie durch den Energiespeicher (20) erforderlich ist, und die Lastleistung der externen elektrischen Last (30) abschnittsweise die Leistung der externen elektrischen Quelle (40) unterschreitet, so dass eine Aufnahme von Energie durch den Energiespeicher (20) erforderlich ist, und wobei Abschnitte, in denen eine Abgabe von Energie durch den Energiespeicher (20) erforderlich ist, und Abschnitte, in denen eine Aufnahme von Energie durch den Energiespeicher (20) erforderlich ist, sich in zeitlicher Folge abwechseln; und
wobei in jedem Betriebsmodus die jeweilige erste Speicherzelle für einen Ladevorgang bereitgestellt wird, so dass bei erforderlicher Aufnahme von Energie durch den Energiespeicher (20) von der externen Quelle (40) ausschließlich die erste Speicherzelle geladen wird, und die jeweilige zweite Speicherzelle für einen Entladevorgang bereitgestellt wird, so dass bei erforderlicher Abgabe von Energie durch den Energiespeicher (20) an die externe elektrische Last (30) ausschließlich die zweite Speicherzelle entladen wird.

3. Verfahren nach zumindest einem der vorhergehenden Ansprüche,
wobei ein Umschalten zwischen den Betriebsmoden erfolgt, wenn die Restkapazität der jeweiligen ersten Speicherzelle des aktiven Betriebsmodus einen vorbestimmten ersten Schwellwert erreicht oder überschreitet; und optional
wobei bei Erreichen oder Überschreiten des ersten Schwellwerts durch die Restkapazität der jeweiligen ersten Speicherzelle des aktiven Betriebsmodus in einen Betriebsmodus gewechselt wird, in dem eine Speicherzelle des Energiespeichers (20) mit niedrigerer Restkapazität als die bisherige erste Speicherzelle als neue erste Speicherzelle betrieben wird.

4. Verfahren nach zumindest einem der vorhergehenden Ansprüche,
wobei ein Umschalten zwischen den Betriebsmoden erfolgt, wenn der Ladungszustand der jeweiligen zweiten Speicherzelle des aktiven Betriebsmodus einen vorbestimmten zweiten Schwellwert erreicht oder unterschreitet; und optional
wobei bei Erreichen oder Unterschreiten des zweiten Schwellwerts durch die Restkapazität der jeweiligen zweiten Speicherzelle des aktiven Betriebsmodus in einen Betriebsmodus gewechselt wird, in dem eine Speicherzelle des Energiespeichers (20) mit höherer Restkapazität als die bisherige zweite Speicherzelle als neue zweite Speicherzelle betrieben wird.

5. Verfahren nach zumindest einem der Ansprüche 1 bis 4, wobei zur Aufrechterhaltung des ersten Spannungsniveaus für die erste Speicherzelle des aktiven Betriebsmodus Energie von der zweiten Speicherzelle des aktiven Betriebsmodus an die erste Speicherzelle übertragen wird.

6. Verfahren nach zumindest einem der vorhergehenden Ansprüche, wobei beim Umschalten von einem ersten der zumindest zwei Betriebsmoden zu einem zweiten der zumindest zwei Betriebsmoden die jeweils ersten und zweiten Speicherzellen ihre Rollen tauschen.

7. Verfahren nach zumindest einem der vorhergehenden Ansprüche,
wobei der Energiespeicher (20) mehr als zwei Speicherzellen umfasst und in zumindest einem der Betriebsmoden zumindest eine der Speicherzellen als eine dritte Speicherzelle betrieben wird und die dritte Speicherzelle in einem Ruhezustand gehalten wird; oder
wobei das Verfahren einen weiteren Betriebsmodus umfasst, in dem zumindest eine der Speicherzellen (20a, 20b) des Energiespeichers (20) in einem Ruhezustand gehalten wird.

8. Steuerungseinrichtung (10) für das Energiemanagement eines Energiespeichers (20) für elektrische Energie mit zumindest zwei Speicherzellen (20a, 20b), der Energie an eine externe elektrische Last (30) abgeben und Energie von einer externen Quelle (40) aufnehmen kann, wobei die Steuerungseinrichtung (10) dazu ausgestaltet ist,
zumindest zwei verschiedene Betriebsmoden für das Energiemanagement bereitzustellen, wobei in jedem Betriebsmodus eine der Speicherzellen des Energiespeichers (20) als eine erste Speicherzelle betrieben wird, und eine weitere Speicherzelle des Energiespeichers (20) als eine zweite Speicherzelle betrieben wird,
in jedem Betriebsmodus bei Aufnahme von Energie durch den Energiespeicher von der externen Quelle ausschließlich die erste Speicherzelle zu laden, und bei Abgabe von Energie durch den Energiespeicher an die externe elektrische Last ausschließlich die zweite Speicherzelle zu entladen, und
zwischen den Betriebsmoden in Abhängigkeit von der Restkapazität zumindest einer der ersten und zweiten Speicherzellen des jeweils aktiven Betriebsmodus umzuschalten,
**dadurch gekennzeichnet, dass** diese ferner dazu ausgestaltet ist, in jedem Betriebsmodus die jeweilige erste Speicherzelle auf einem ersten Spannungsniveau zu halten, das im Wesentlichen der Ladespannung der Speicherzellen entspricht; und/oder
die dazu ausgestaltet ist, in jedem Betriebsmodus die jeweilige zweite Speicherzelle auf einem zweiten Spannungsniveau zu halten, das im Wesentlichen der Entladespannung der Speicherzellen entspricht.

9. Steuerungseinrichtung nach Anspruch 8, die dazu ausgestaltet ist, zwischen den Betriebsmoden umzuschalten, wenn der Ladungszustand der jeweiligen ersten Speicherzelle des aktiven Betriebsmodus einen vorbestimmten ersten Schwellwert erreicht oder überschreitet; und
die optional dazu ausgestaltet ist, bei Erreichen oder Überschreiten des ersten Schwellwerts durch die Restkapazität der jeweiligen ersten Speicherzelle des aktiven Betriebsmodus in einen Betriebsmodus zu wechseln, in dem eine Speicherzelle des Energiespeichers (20) mit niedrigerer Restkapazität als die bisherige erste Speicherzelle als neue erste Speicherzelle betrieben wird.

10. Steuerungseinrichtung nach zumindest einem der Ansprüche 8 bis 9,
die dazu ausgestaltet ist, zwischen den Betriebsmoden umzuschalten, wenn der Ladungszustand der jeweiligen zweiten Speicherzelle des aktiven Betriebsmodus einen vorbestimmten zweiten Schwellwert erreicht oder unterschreitet; und
die optional dazu ausgestaltet ist, bei Erreichen oder Unterschreiten des zweiten Schwellwerts durch die Restkapazität der jeweiligen zweiten Speicherzelle des aktiven Betriebsmodus in einen Betriebsmodus zu wechseln, in dem eine Speicherzelle des Energiespeichers (20) mit höherer Restkapazität als die bisherige zweite Speicherzelle als neue zweite Speicherzelle betrieben wird.

11. Steuerungseinrichtung nach zumindest einem der Ansprüche 8 bis 10, die dazu ausgestaltet ist, zur Aufrechterhaltung des ersten Spannungsniveaus für die erste Speicherzelle des aktiven Betriebsmodus Energie von der zweiten Speicherzelle des aktiven Betriebsmodus an die erste Speicherzelle zu übertragen.

12. Steuerungseinrichtung nach zumindest einem der Ansprüche 8 bis 11, wobei beim Umschalten von einem ersten der zumindest zwei Betriebsmoden zu einem zweiten der zumindest zwei Betriebsmoden die jeweils ersten und zweiten Speicherzellen ihre Rollen tauschen.

13. Steuerungseinrichtung nach zumindest einem der Ansprüche 10 bis 12,
wobei der Energiespeicher (20) mehr als zwei Speicherzellen umfasst und die Steuerungseinrichtung dazu ausgestaltet ist, in zumindest einem der Betriebsmoden zumindest eine der Speicherzellen als eine dritte Speicherzelle zu betreiben, die in einem Ruhezustand gehalten wird; oder
wobei die Steuerungseinrichtung dazu ausgestaltet ist, einen weiteren Betriebsmodus bereitzustellen, in dem zumindest eine der Speicherzellen (20a, 20b) des Energiespeichers (20) in einem Ruhezustand gehalten wird.

## Claims

1. A method for energy management of an energy store (20) for electrical energy having at least two storage cells (20a, 20b) capable of supplying energy to an external electrical load (30) and receiving energy from an external source (40),
said method having at least two different operating modes for the energy management,
wherein, in each operating mode, one of said storage cells of said energy store (20) is operated as a first storage cell, and another storage cell of said energy store (20) is operated as a second storage cell,
wherein, in each operating mode, when energy is received by said energy store (20) from said external source (40), only said first storage cell is charged, and when energy is supplied by said energy store to said external electrical load (30), only said second storage cell is discharged, and
wherein switching between said operating modes is carried out based on the residual capacity of at least one of said first and second storage cells of the respectively active operating mode,
wherein, in each operating mode, the respective first storage cell is kept at a first voltage level substantially equivalent to the charging voltage of the storage cells; and or
wherein, in each operating mode, the respective second storage cell is kept at a second voltage level substantially equivalent to the discharging voltage of the storage cells.

2. The method according to claim 1,
wherein the load power of said external electrical load (30) exceeds the power of said external electrical source (40) in segments, so that an output of energy by said energy store (20) is required, and the load power of said external electrical load (30) falls below the power said external electrical source (40) in segments, so that a reception of energy by said energy store (20) is required, and wherein segments in which an output of energy by said energy store (20) is required, and segments in which a reception of energy by said energy store (20) is required, alternate in temporal succession; and
wherein, in each operating mode, the respective first storage cell is provided for a charging operation, so that when energy is required to be received by said energy store (20) from said external source (40), only the first storage cell is charged, and the respective second storage cell is provided for a discharging operation, so that when the energy is required to be supplied by said energy storage (20) to said external electrical load (30), only the second storage cell is discharged.

3. The method according to at least one of the preceding claims,
wherein switching between the operating modes is performed when the residual capacity of the respective first storage cell of the active operating mode reaches or exceeds a predetermined first threshold value; and optionally
wherein, when the first threshold value is reached or exceeded by the residual capacity of the respective first storage cell of the active operating mode, switching is performed to an operating mode in which a storage cell of said energy store (20) having lower residual capacity than the previous first storage cell is operated as a new first storage cell.

4. The method according to at least one of the preceding claims,
wherein switching between the operating modes is performed when the state of charge of the respective second storage cell of the active operating mode reaches or falls below a predetermined second threshold value; and optionally
wherein, when the residual capacity of the respective second storage cell of the active operating mode reaches or falls below the second threshold value, switching is performed to an operating mode in which a storage cell of said energy store (20) having higher residual capacity than the previous second storage cell is operated as a new second storage cell.

5. The method according to at least one of claims 1 to 4, wherein, in order to maintain the first voltage level for the first storage cell of the active operating mode, energy is transferred from the second storage cell of the active operating mode to the first storage cell.

6. The method according to at least one of the preceding claims, wherein, when switching from a first of the at least two operating modes to a second of the at least two operating modes, the respective first and second storage cells switch their roles.

7. The method according to at least one of the preceding claims,
wherein said energy store (20) comprises more than two storage cells and, in at least one of the operating modes, at least one of the storage cells is operated as a third storage cell and the third storage cell is kept in an idle state; or
wherein said method comprises a further operating mode in which at least one of said storage cells (20a, 20b) of said energy store (20) is kept in an idle state

8. A control device (10) for the energy management of an energy store (20) for electrical energy having at least two storage cells (20a, 20b) capable of supplying energy to an external electrical load (30) and receiving energy from an external source (40), said control device (10) being configured to execute the steps of
providing at least two different operating modes for the energy management, wherein, in each operating mode, one of the storage cells of said energy store (20) is operated as a first storage cell, and another storage cell of said energy store (20) is operated as a second storage cell,
in each operating mode, when energy is received by said energy store from said external source, charging only the first storage cell, and when energy is supplied by said energy store to said external electrical load, discharging only the second storage cell, and
switching between the operating modes based on the residual capacity of at least one of the first and second storage cells of the respective active operating mode,
**characterized in that** said control device is further configured to execute the steps of
in each operating mode, keeping the respective first storage cell at a first voltage level substantially equivalent to the charging voltage of the storage cells; and/or
in each operating mode, keeping the respective second storage cell at a second voltage level substantially equivalent to the discharging voltage of the storage cells.

9. The control device according to claim 8, said control device being configured to switch between the operating modes when the state of charge of the respective first storage cell of the active operating mode reaches or exceeds a predetermined first threshold value; and
said control device being optionally configured to switch, when the first threshold value of the respective first storage cell of the active operating mode is reached or exceeded, to an operating mode in which a storage cell of said energy store (20) having a lower residual capacity than the previous first storage cell is operated as a new first storage cell.

10. The control device according to at least one of claims 8 to 9, said control device being configured to switch between the operating modes when the state of charge of the respective second storage cell of the active operating mode reaches or falls below a predetermined second threshold value; and
said control device being optionally configured to switch, when the residual capacity of the respective second storage cell of the active operating mode reaches or falls below the second threshold value, to an operating mode in which a storage cell of said energy store (20) having a higher residual capacity than the previous second storage cell is operated as a new second storage cell.

11. The control device according to at least one of claims 8 to 10, said control device being configured to transmit energy from the second storage cell of the active operating mode to the first storage cell in order to maintain the first voltage level for the first storage cell of the active operating mode.

12. The control device according to at least one of claims 8 to 11, wherein, when switching from a first of the at least two operating modes to a second of the at least two operating modes, the respective first and second storage cells switch their roles.

13. The control device according to at least one of claims 10 to 12,
wherein said energy store (20) comprises more than two storage cells and said control device is configured to operate, in at least one of the operating modes, at least one of the storage cells as a third storage cell which is kept in an idle state; or
wherein said control device is configured to provide a further operating mode in which at least one of the storage cells (20a, 20b) of said energy store (20) is kept in an idle state.

## Revendications

1. Procédé pour la gestion d'énergie d'un accumulateur d'énergie (20) pour énergie électrique, comportant au moins deux cellules d'accumulation (20a, 20b) et pouvant délivrer de l'énergie à une charge électrique externe (30) et recevoir de l'énergie depuis une source externe (40),
le procédé ayant au moins deux modes de fonctionnement différents pour la gestion d'énergie,
dans lequel
dans chaque mode de fonctionnement, l'une des cellules d'accumulation de l'accumulateur d'énergie (20) fonctionne en tant que première cellule d'accumulation et une autre cellule d'accumulation de l'accumulateur d'énergie (20) fonctionne en tant que seconde cellule d'accumulation,
dans chaque mode de fonctionnement, lors de la réception d'énergie par l'accumulateur d'énergie (40) depuis la source externe (40), exclusivement la première cellule d'accumulation est chargée, et lors de la délivrance d'énergie par l'accumulateur d'énergie vers la charge électrique externe (30), exclusivement la seconde cellule d'accumulation est déchargée, et
la commutation entre les modes de fonctionnement s'effectue en fonction de la capacité restante de l'une au moins parmi la première et la seconde cellule d'accumulation du mode de fonctionnement respectivement actif,
dans chaque mode de fonctionnement, la première cellule d'accumulation respective est maintenue à un premier niveau de tension qui correspond sensiblement à la tension de charge des cellules d'accumulation ; et/ou
dans chaque mode de fonctionnement, la seconde cellule d'accumulation respective est maintenue à un second niveau de tension qui correspond sensiblement à la tension de décharge des cellules d'accumulation.

2. Procédé selon la revendication 1,
dans lequel
la puissance de charge de la charge électrique externe (30) dépasse par sections la puissance de la source électrique externe (40), de sorte qu'une délivrance d'énergie par l'accumulateur d'énergie (20) est nécessaire, et
la puissance de charge de la charge électrique externe (30) passe par sections au-dessous de la puissance de la source électrique externe (40), de sorte qu'une réception d'énergie par l'accumulateur d'énergie (20) est nécessaire, et
des sections dans lesquelles une délivrance d'énergie par l'accumulateur d'énergie (20) est nécessaire, et des sections dans lesquelles une réception d'énergie par l'accumulateur d'énergie (20) est nécessaire, alternent successivement dans le temps ; et
dans chaque mode de fonctionnement, la première cellule d'accumulation respective est disponible pour une opération de chargement, de sorte que lors d'une réception d'énergie nécessaire par l'accumulateur d'énergie (20) depuis la source externe (40), exclusivement la première cellule d'accumulation est chargée, et la seconde cellule d'accumulation respective est disponible pour une opération de déchargement, de sorte que lors d'une délivrance d'énergie nécessaire par l'accumulateur d'énergie (20) vers la charge électrique externe (30), exclusivement la seconde cellule d'accumulation est déchargée.

3. Procédé selon l'une au moins des revendications précédentes,
dans lequel
une commutation entre les modes de fonctionnement s'effectue lorsque la capacité restante de la première cellule d'accumulation respective du mode de fonctionnement actif atteint ou dépasse une première valeur seuil prédéterminée ; et en option
lorsque la première valeur seuil est atteinte ou dépassée par la capacité restante de la première cellule d'accumulation respective du mode de fonctionnement actif, on passe dans un mode de fonctionnement dans lequel la cellule d'accumulation de l'accumulateur d'énergie (20) fonctionne en tant que nouvelle première cellule d'accumulation à une capacité restante inférieure à celle de la première cellule d'accumulation précédente.

4. Procédé selon l'une au moins des revendications précédentes,
dans lequel
une commutation entre les modes de fonctionnement s'effectue lorsque l'état de chargement de la seconde cellule d'accumulation respective du mode de fonctionnement actif atteint ou passe au-dessous d'une seconde valeur seuil prédéterminée ; et en option
lorsque la première valeur seuil est atteinte ou lors d'un dépassement au-dessous de celle-ci par la capacité restante de la seconde cellule d'accumulation respective du mode de fonctionnement actif, on passe dans un mode de fonctionnement dans lequel une cellule d'accumulation de l'accumulateur d'énergie (20) fonctionne en tant que nouvelle seconde cellule d'accumulation à une capacité restante supérieure à celle de la seconde cellule d'accumulation précédente.

5. Procédé selon l'une au moins des revendications 1 à 4,
dans lequel
pour maintenir le premier niveau de tension pour la première cellule d'accumulation du mode de fonctionnement actif, de l'énergie est transmise depuis la seconde cellule d'accumulation du mode de fonctionnement actif à la première cellule d'accumulation.

6. Procédé selon l'une au moins des revendications précédentes,
dans lequel
lors de la commutation depuis un premier parmi lesdits au moins deux modes de fonctionnement vers un second parmi lesdits au moins deux modes de fonctionnement, les premières et secondes cellules d'accumulation respectives échangent leurs rôles.

7. Procédé selon l'une au moins des revendications précédentes,
dans lequel
l'accumulateur d'énergie (20) comprend plus de deux cellules d'accumulation, et dans l'un au moins des modes de fonctionnement, l'une au moins des cellules d'accumulation fonctionne en tant que troisième cellule d'accumulation, et la troisième cellule d'accumulation est maintenue dans un état de repos ; ou
la procédé comprend un autre mode de fonctionnement dans lequel l'une au moins des cellules d'accumulation (20a, 20b) de l'accumulateur d'énergie (20) est maintenue dans un état de repos.

8. Système de commande (10) pour la gestion d'énergie d'un accumulateur d'énergie (20) pour énergie électrique, comportant au moins deux cellules d'accumulation (20a, 20b) et pouvant délivrer de l'énergie vers une charge électrique externe (30) et recevoir de l'énergie depuis une source externe (40), le système de commande (10) étant conçu pour
mettre à disposition au moins deux modes de fonctionnement différents pour la gestion d'énergie,
dans lequel
dans chaque mode de fonctionnement, l'une des cellules d'accumulation de l'accumulateur d'énergie (20) fonctionne en tant que première cellule d'accumulation, et une autre cellule d'accumulation de l'accumulateur d'énergie (20) fonctionne en tant que seconde cellule d'accumulation,
dans chaque mode de fonctionnement, lors de la réception d'énergie par l'accumulateur d'énergie depuis la source externe, charger exclusivement la première cellule d'accumulation, et lors de la délivrance d'énergie par l'accumulateur d'énergie vers la charge électrique externe, décharger exclusivement la seconde cellule d'accumulation, et
commuter entre les modes de fonctionnement en fonction de la capacité restante de l'une au moins parmi les premières et secondes cellules d'accumulation du mode de fonctionnement respectivement actif,
**caractérisé en ce que** celui-ci est en outre conçu pour
maintenir, dans chaque mode de fonctionnement, la première cellule d'accumulation respective à un premier niveau de tension qui correspond sensiblement à la tension de charge des cellules d'accumulation ; et/ou pour
maintenir, dans chaque mode de fonctionnement, la seconde cellule d'accumulation respective à un second niveau de tension qui correspond sensiblement à la tension de décharge des cellules d'accumulation.

9. Système de commande selon la revendication 8, qui est conçu pour commuter entre les mode de fonctionnement lorsque l'état de charge de la première cellule d'accumulation respective du mode de fonctionnement actif atteint ou dépasse une première valeur seuil prédéterminée ; et
qui est en option conçu pour passer, lorsque la première valeur seuil est atteinte ou dépassée par la capacité restante de la première cellule d'accumulation respective du mode de fonctionnement actif, jusque dans un mode de fonctionnement dans lequel une cellule d'accumulation de l'accumulateur d'énergie (20) fonctionne en tant que nouvelle première cellule d'accumulation à une capacité restante inférieure à celle de la première cellule d'accumulation précédente.

10. Système de commande selon l'une au moins des revendications 8 à 9, qui est conçu pour commuter entre les mode de fonctionnement lorsque l'état de charge de la seconde cellule d'accumulation respective du mode de fonctionnement actif atteint ou passe au-dessous d'une seconde valeur seuil prédéterminée ; et
qui est en option conçu pour passer, lorsque la seconde valeur seuil est atteinte ou lors d'un passage au-dessous de celle-ci par la capacité restante de la seconde cellule d'accumulation respective du mode de fonctionnement actif, jusque dans un mode de fonctionnement dans lequel une cellule d'accumulation de l'accumulateur d'énergie (20) fonctionne en tant que nouvelle seconde cellule d'accumulation à une capacité restante supérieure à celle de la seconde cellule d'accumulation précédente.

11. Système de commande selon l'une au moins des revendications 8 à 10, qui, en vue de maintenir le premier niveau de tension pour la première cellule d'accumulation du mode de fonctionnement actif, est conçu pour transmettre de l'énergie depuis la seconde cellule d'accumulation du mode de fonctionnement actif à la première cellule d'accumulation.

12. Système de commande selon l'une au moins des revendications 8 à 11, dans lequel, lors de la commutation depuis un premier desdits au moins deux modes de fonctionnement vers un second desdits au moins deux modes de fonctionnement, les premières et les secondes cellules d'accumulation respectives échangent leurs rôles.

13. Système de commande selon l'une au moins des revendications 10 à 12, dans lequel
l'accumulateur d'énergie (20) comprend plus de deux cellules d'accumulation, et le système de commande est conçu pour faire fonctionner, dans l'un au moins des modes de fonctionnement, l'une au moins des cellules d'accumulation en tant que troisième cellule d'accumulation qui est maintenue dans un état de repos ; ou
le système de commande est conçu pour mettre à disposition un autre mode de fonctionnement dans lequel l'une au moins des cellules d'accumulation (20a, 20b) de l'accumulateur d'énergie (20) est maintenu dans un état de repos.
